(19) Europäisches Patentamt
European Patent Office
Office européen des brevets

(11) Veröffentlichungsnummer : **0 495 207 B1**

(12) # EUROPÄISCHE PATENTSCHRIFT

(45) Veröffentlichungstag der Patentschrift :
**19.01.94 Patentblatt 94/03**

(51) Int. Cl.$^5$ : **C09D 127/12,**
// (C09D127/12, 127:12)

(21) Anmeldenummer : **91121357.7**

(22) Anmeldetag : **12.12.91**

(54) **Fluorhaltiges Lackbindemittel.**

(30) Priorität : **15.12.90 DE 4040128**

(43) Veröffentlichungstag der Anmeldung :
**22.07.92 Patentblatt 92/30**

(45) Bekanntmachung des Hinweises auf die Patenterteilung :
**19.01.94 Patentblatt 94/03**

(84) Benannte Vertragsstaaten :
**AT BE CH DE DK ES FR GB IT LI LU NL SE**

(56) Entgegenhaltungen :
**EP-A- 0 311 052**
**US-A- 3 380 971**
**US-A- 4 859 755**

(73) Patentinhaber : **HOECHST AKTIENGESELLSCHAFT**
**D-65926 Frankfurt (DE)**

(72) Erfinder : **Schlipf, Michael, Dr.**
**Putzenlehnerstrasse 22**
**W-8269 Burgkirchen (DE)**
Erfinder : **Blädel, Hermann**
**Kanalstrasse 3**
**W-8269 Burgkirchen (DE)**

EP 0 495 207 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein fluorhaltiges Lackbindemittel.

Lacksysteme auf der Basis fluorhaltiger Copolymerer, die Anteile vernetzungsfähiger OH-Gruppen enthalten, sind bekannt. Üblicherweise werden solche Lacksysteme mit hohen Anteilen von Pigmenten versehen, um eine hohe Deckkraft für damit hergestellte Anstriche zu gewährleisten, beispielsweise als Fassadenanstriche. Jedoch wirken die eingebetteten Pigmentteilchen in gewissem Ausmaß als Fremdkörper und Störstellen im Überzugsgefüge, die feinste Kanäle für das Eindringen von Feuchtigkeit öffnen können, im äußersten Fall durch den Überzug hindurch bis zum Substrat. Vor allem bei metallischen Substraten führt dies zum korrosiven Angriff, was auch zum Austritt, beispielsweise von Rostpartikeln auf die Oberfläche und damit zur Verfärbung derselben führen kann. Man behilft sich daher häufig damit, daß man auf den eigentlichen Anstrich noch einen wenig oder nicht pigmentierten Schlußstrich aufbringt. Jedoch ist dies ein zusätzlicher kostenaufwendiger Arbeitsgang.

Es wurde nun überraschenderweise gefunden, daß die genannten Nachteile nicht eintreten, wenn man dem Lacksystem ein sogenanntes Fluorcarbonwachs hinzufügt. Gemäß der vorliegenden Erfindung wird also ein fluorhaltiges Lackbindemittel vorgeschlagen, das enthaltend

a) 5 bis 80 Gew.-%, bezogen auf die Summe der Komponenten a) + b), eines feinteiligen niedermolekularen Polyfluorolefins, abgeleitet von Fluorolefinen der Formel CF2=CFX, worin X = F oder Cl ist, mit einer Schmelzviskosität von $10^1$ bis $10^6$ Pa s,

b) 95 bis 20 Gew.-%, bezogen auf die Summe der Komponenten a) + b), eines fluorhaltigen Copolymeren, das aus copolymerisierten Einheiten eines Fluorolefins der allgemeinen Formel $CF_2$=CFY, worin Y = F, ein Perfluoralkylrest mit 1 bis 8 C-Atomen oder Cl ist, aus copolymerisierten Einheiten eines Vinylesters einer stark verzweigten Carbonsäure mit einem Acylrest von 9 bis 11 C-Atomen und aus copolymerisierten Einheiten eines OH-Gruppen enthaltenden Vinylmonomeren zusammengesetzt ist, und

c) 20 bis 300 Gew.-Teilen, bezogen auf 100 Gew.-Teile der Summe a) + b), eines üblichen Lacklösungsmittels.

Die Komponente a) ist ein niedermolekulares Homopolymeres des Trifluorchlorethylens oder vorzugsweise des Tetrafluorethylens. Solche sogenannten Fluorcarbonwachse - gelegentlich auch als Mikropulver bezeichnet - weisen ein niedrigeres Molekulargewicht auf als das übliche hochmolekulare Polytetrafluorethylen (PTFE) oder Polychlortrifluorethylen (PCTFE), was sich in einer niedrigeren Schmelzviskosität ausdrückt, die $10^1$ bis $10^6$ Pa s, vorzugsweise $10^1$ bis $10^5$ Pa s, beträgt.

Für den Einsatz im erfindungsgemäßen Lackbindemittel sollen diese Fluorcarbonwachse feinteilig sein. Geeignet sind Pulver mit einer mittleren Teilchengröße des Primärkorns von 0,1 bis 15 µm, vorzugsweise 0,1 bis 10 µm.

Solche niedermolekularen Fluorcarbonwachse (PTFE und PCTFE) können auf zwei verschiedene Arten hergestellt werden, nämlich einmal durch Abbau von hochmolekularem PTFE oder PCTFE zu kleineren Kettenlängen, wozu insbesondere auch Abfälle von hochmolekularem Material Verwendung finden, und zum anderen durch den Aufbau von relativ kurzen Ketten durch Telomerisation von TFE oder CTFE in Gegenwart geeigneter Telogene.

Der Abbau von hochmolekularem PTFE kann pyrolytisch bei Temperaturen meist über 400 °C bewirkt werden, gegebenenfalls unter vermindertem Druck und in Gegenwart von Inertgasen und Katalysatoren. Derartige Verfahren und die daraus resultierenden Produkte sind beispielsweise bekannt aus den US-Patentschriften 2 496 978, 3 223 739 und 4 076 760. Der ähnlich verlaufende pyrolytische Abbau von PCTFE ist beispielsweise beschrieben in den US-Patentschriften 2 543 530, 2 664 449 und 2 854 490.

Derartige Fluorcarbon-Abbauwachse können aber auch gewonnen werden durch Abbau von hochmolekularem PTFE oder PCTFE mittels energiereicher, ionisierender Strahlung, wie insbesondere Gamma-Strahlung, Röntgenstrahlung oder Neutronenstrahlung. Solche Verfahren und die dabei entstehenden PTFE- und PCTFE-Wachse sind beispielsweise beschrieben in der GB-Patentschrift 768 554, in den US-Patentschriften 3 766 031, 3 838 030, 4 029 870, 4 036 718, 4 052 278 sowie der EP-Patentschrift 17 349 und den DE-Offenlegungsschriften 2 456 869 und 2 456 870.

Schließlich können auch sogenannte PTFE- oder PCTFE-Aufbauwachse in den erfindungsgemäßen Lackbindemitteln Verwendung finden, wie sie durch Telomerisation von TFE oder CTFE in geeigneten Telomeren oder durch Oligomerisierung erhältlich sind. Dabei kann die Telomerisation entweder im Telogen selbst oder dessen Gemisch mit einem anderen organischen Lösungsmittel als flüssige Phase durchgeführt werden oder aber in einer wäßrigen Phase in Gegenwart des Telogens und eines oberflächenaktiven Mittels. Im ersten Fall entstehen feste, körnige und kristalline Wachse, im zweiten Fall kolloidale wäßrige Dispersionen, aus denen das Wachs mit geeigneten Mitteln koaguliert und abgetrennt wird, wobei traubenförmige Teilchenagglomerate mit einer Primärkornstruktur entstehen. Solche durch Telomerisation hergestellte PTFE- und

PCTFE-Wachse sind beschrieben in den US-Patentschriften 2 694 701, 2 700 661, 3 067 262, 3 102 862, 3 103 490, 3 105 824 und 3 956 000.

Für die Zwecke der vorliegenden Erfindung müssen derartige Fluorcarbonwachse, die auch im Handel erhältlich sind, gegebenenfalls noch einer Feinmahlung unterzogen werden. Die Teilchen sollen eine mittlere Teilchengröße (im Fall von Agglomeraten die Teilchengröße des Primärkorns) von 0,1 bis 15 µm, vorzugsweise 0,1 bis 10 µm, besitzen. Die Schmelzviskosität der Fluorcarbonwachse beträgt $10^1$ bis $10^6$ Pa s, vorzugsweise $10^1$ bis $10^5$ Pa s.

Die für das erfindungsgemäße fluorhaltige Lackbindemittel in Frage kommenden fluorhaltigen Copolymeren der Komponente b) sind solche, die copolymerisierte Einheiten eines Fluorolefins der allgemeinen Formel $CF_2$=CFY, worin Y = F, ein Perfluoralkylrest mit 1 bis 8 C-Atomen oder Cl ist, enthalten. Dies sind beispielsweise Perfluorbuten-1, Perfluorocten-1, Perfluorhexen-1 und Perfluorisobuten und vorzugsweise Chlortrifluorethylen, Hexafluorpropylen sowie insbesondere Tetrafluorethylen. Sie enthalten ferner copolymerisierte Einheiten eines Vinylesters einer stark verzweigten Carbonsäure, der der Verseifung widersteht. Es sind dies Vinylester der allgemeinen Formel

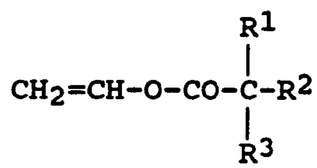

worin $R^1$, $R^2$ oder $R^3$ verzweigte oder geradkettige Alkylreste sind und der gesamte Acylrest 9 bis 11 C-Atome aufweist. Dabei kann höchstens einer dieser Reste $R^1$, $R^2$, $R^3$ Wasserstoff sein. Bevorzugt sind verzweigte Acylreste der obigen Formel, die 9 C-Atome besitzen und außer dem einen quartären C-Atom noch ein zweites quartäres C-Atom oder noch 1 bis 2 tertiäre C-Atome im gleichen Rest aufweisen. Sie enthalten schließlich copolymerisierte Einheiten von Vinylmonomeren, die die für die Vernetzung im Lacksystem erforderlichen OH-Gruppen liefern. Diese Monomeren können OH-Gruppen als solche bereits enthalten, oder die OH-Gruppen können am bereits fertigen Copolymerisat aus Funktionen gebildet werden, die der Hydrolyse oder Alkoholyse zu OH-Gruppen zugänglich sind. Die erstere Art von Monomeren sind vorzugsweise Hydroxyalkylvinylether mit einer Hydroxyalkylgruppe von 1 bis 6 C-Atomen. Solche Copolymere sind bekannt aus der US-Patentschrift 4 859 755. Die zweite Art von Monomeren sind vorzugsweise Vinylester von kurzkettigen Carbonsäuren, die verseifbar sind, insbesondere von Carbonsäuren, deren Acylrest 2 bis 4 C-Atome besitzt, wie vor allem Vinylpropionat und insbesondere Vinylacetat. Dabei macht zweckmäßigerweise der Vinylester einer stark verzweigten Carbonsäure 10 bis 60 Mol-% und das OH-Gruppen enthaltende Vinylmonomere 20 bis 50 Mol-% aus, und das Fluorolefin ergänzt die Summe der drei Komponenten auf 100 Mol-%, wobei der Anteil des Fluorolefins mindestens 10 Mol-%, vorzugsweise 20 Mol-%, beträgt.

Die Copolymerisation zur Herstellung der genannten Copolymeren erfolgt vorzugsweise in organischen Lösungsmitteln, die das gebildete Copolymere lösen. Dafür geeignete Lösungsmittel sind insbesondere perfluorierte oder mit Fluor und Chlor perhalogenierte oder teilweise halogenierte Lösungsmittel, wie beispielsweise 1,1,2-Trichlor-1,2,2-trifluorethan, Perfluorcyclobutan, Perfluor-n-pentan, -isopentan, -n-hexan, -isohexan, 1,1,1,2-Tetrafluorethan oder 1,1,2,2-Tetrafluorethan.

Ferner kommen in Betracht Alkanole, wie tert.-Butanol, Carbonsäureester, wie beispielsweise Butylacetat oder n-Propylacetat, oder aliphatische oder cycloaliphatische Ketone, wie beispielsweise Methylisobutylketon oder Cyclohexanon, sowie ferner Alkylaromaten, wie beispielsweise Toluol oder Xylol, oder auch Gemische aus den genannten Lösungsmitteln sowie ferner Gemische der genannten Lösungsmittel mit Ethanol.

Die Copolymerisation zur Herstellung der genannten Copolymeren der Komponente b) kann in bekannter Weise auch erfolgen in wäßriger Phase nach dem Verfahren der Suspensionspolymerisation in Gegenwart von Puffersubstanzen, geeigneten radikalbildenden Initiatoren und gegebenenfalls von geringen Mengen an Emulgatoren oder zu wäßrigen kolloidalen Dispersionen nach dem Verfahren der Emulsionspolymerisation in Gegenwart von geeigneten, insbesondere fluorhaltigen oberflächenaktiven Mitteln als Emulgatoren. Auch Kettenübertragungsmittel können sowohl bei wäßriger als auch bei der nicht wäßrigen Copolymerisation zugegen sein.

Je nach Art des gewählten Verfahrens bei der Copolymerisation fällt das Copolymere in Form einer klaren, niedrigviskosen Lösung, eines körnigen Pulvers oder einer wäßrigen, kolloidalen Dispersion an. Letztere wird zunächst durch Zugabe geeigneter Koagulationsmittel oder durch das Einbringen hoher Scherkräfte gefällt und das gebildete Koagulat gewaschen und getrocknet.

Das so gewonnene Copolymere wird - wenn es Einheiten eines Vinylesters einer kurzkettigen Carbonsäure als OH-Gruppen liefernde Anteile enthält - anschließend einer Nachbehandlung zwecks Verseifung der Einheiten dieses Vinylesters unterworfen, wobei der Begriff "Verseifung" hier die Esterspaltung durch Hydrolyse und/oder durch Alkoholyse umfassen soll. Dazu kann das pulverförmige Copolymere zunächst in einem Alkanol mit 1 bis 4 C-Atomen gelöst und dann mit Wasser gefällt werden. Auch kann die Verseifung mit wäßrigen Alkalien oder quaternären Ammoniumhydroxiden bewirkt werden.

Für die Aufarbeitung von in Lösung befindlichen Copolymeren wird zweckmäßigerweise ein Verfahren angewendet, bei dem

a) zunächst der Hauptteil des Lösungsmittels unter Normaldruck destillativ entfernt wird,

b) sodann die Restmonomeren durch Vakuumdestillation unter Zwangsförderung des hochviskosen Copolymeren entfernt werden,

c) dieses hochviskose Copolymere gelöst wird in einem Gemisch aus einem Alkanol mit 1 bis 4 C-Atomen und einem Lösungsmittel, wobei dieses Gemisch imstande sein soll, auch das verseifte Produkt homogen zu lösen, und

d) die Verseifung unter Zugabe eines alkalischen Agens durchgeführt, gegebenenfalls das Lösungsmittel aus c) destillativ abgetrennt und das verbleibende hochviskose Copolymere in einem Lacklösungsmittel gelöst wird, und

e) die entstandene Copolymerlösung einer Filtration unterworfen wird.

Mit dem genannten Verfahren ist es möglich, die Einheiten des genannten Vinylesters in einem Anteil von 50 bis 100 %, vorzugsweise von 50 bis 80 %, in OH-Gruppen zu überführen.

Die auf diese Weise erhaltenen erfindungsgemäßen Copolymeren sind in einer Vielzahl von organischen Lösungsmitteln gut löslich, vor allem in Lösungsmitteln und Lösungsmittelgemischen, wie sie in der Lackindustrie üblicherweise verwendet werden. Diese Lösungsmittel in einem Anteil von 20 bis 300 Gew.-Teilen, vorzugsweise 50 bis 250 Gew.-Teilen, bezogen auf 100 Gew.-Teile der Summe der Komponenten a) + b), machen die Komponente c) des erfindungsgemäßen Lackbindemittels aus.

Solche Lösungsmittel werden vor allem aus den folgenden Gruppen ausgewählt: aliphatische Alkohole mit 1 bis 8 C-Atomen, insbesondere mit 4 bis 8 C-Atomen; Polyglykole, wie Ethylendiglykol, Ethylentriglykol, Propylendiglykol, Propylentriglykol; Mono- und Diether solcher Glykole, wie beispielsweise Ethylenglykolmonoethylether, Ethylenglykoldiethylether, Ethylenglykolmonobutylether, Ethylenglykoldibutylether, Propylenglykolmonomethylether; Glykolester oder Glykoletherester, wie beispielsweise Ethylenglykolacetat oder Ethylenglykolacetatethylether, Propylenglykolacetatethylether und -methylether; ferner alkylierte und dialkylierte Aromaten, wie beispielsweise Xylol und Diethylbenzol sowie Isomerengemische alkylierter Aromaten, wie sie unter den Bezeichnungen ®Solvesso oder ®Shellsol vertrieben werden; Ketone, wie zum Beispiel Methylisobutylketon, Cyclohexanon und Isophoron; Carbonsäureester, insbesondere Ester der Essigsäure und Propionsäure mit Alkoholen von 1 bis 6 C-Atomen; schließlich alle Gemische solcher Lösungsmittel, soweit sie homogen miteinander mischbar sind.

Das Vermischen der Komponenten a), b) und c) des fluorhaltigen Lackbindemittels kann auf verschiedene Weise erfolgen. Liegt das fluorhaltige Copolymere b) in festem pulverförmigem Zustand vor, so wird zweckmäßigerweise dieses Copolymere zunächst unter Rühren in einem Lösungsmittel der Komponente c) gelöst und dann das niedermolekulare Polyhalogenolefin (Fluorcarbonwachs) a) unter Verwendung einer Mischungsvorrichtung eingemischt. Man kann aber auch das pulverförmige Copolymer b) und das Fluorcarbonwachs a) in festem Zustand in einer für feste Stoffe geeigneten Mischungsvorrichtung vormischen und dann in das Lösungsmittel c) eintragen und unter Verwendung eines geeigneten Mischers homogenisieren. Liegt das fluorhaltige Copolymere b) von der Aufarbeitung her in Lösung in einem Lösungsmittel der Koponente c) bereits vor, so wird, wie oben beschrieben, das Fluorcarbonwachs a) unter Verwendung herkömmlicher Mischungsvorrichtungen, zum Beispiel Perl- und Kugelmühlen, Lackschüttelgeräte, Sandmühlen, Strahlmühlen, Dreiwalzenmühlen, Kneter und Dissolver, eingemischt und homogenisiert. Vorzugsweise werden Perlmühlen verwendet. Die Zumischung von Pigmenten und anderen Additiven erfolgt in gleicher Weise.

Die im erfindungsgemäßen Lackbindemittel enthaltenen Copolymeren besitzen OH-Gruppen, die eine chemische Härtung des Lacks nach der Applikation ermöglichen. Je nach Auswahl des Vernetzungsmechanismus kann die Härtung bei Temperaturen zwischen 10 und 300 °C, vorzugsweise zwischen 15 und 250 °C, erfolgen.

Wenn das erfindungsgemäße Lackbindemittel zur Herstellung einer wärmehärtbaren Lackzusammensetzung verwendet wird, so können verschiedene Härter, so zum Beispiel Aminoplaste, wie Melaminharze und Harnstoffharze, oder auch mehrbasische Säuren und Anhydride sowie blockierte Polyisocyanate, zugemischt werden, wobei diese Mischungen Einkomponenten-Beschichtungssysteme darstellen.

Daraus entstehen Überzüge, die hervorragend verlaufen und besonders elastische, haftfeste, korrosions- und witterungsstabile, insbesondere wasserfeste Grundierungen, Decklacke und Einschichtlackierungen ergeben. Für das Härten solcher als Einkomponenten-Beschichtungssystem vorliegender, modifizierter Lacke

sind Einbrenntemperaturen von mindestens 80 °C erforderlich. Man kann die Vernetzungsreaktion durch Zusatz eines sauren Katalysators, wie beispielsweise p-Toluolsulfonsäure oder deren Salze, beschleunigen.

Typische Beispiele für Aminoplaste sind Kondensationsprodukte von Aminogruppen tragenden Verbindungen, wie beispielsweise Melamin, Harnstoff, Acetoguanamin oder Benzoguanamin, und Aldehyden, wie beispielsweise Formaldehyd, Paraformaldehyd, Acetaldehyd oder Glyoxal, sowie Produkte, die durch Veretherung dieser Kondensationsprodukte mit Alkoholen erhalten werden. Hierzu werden vorzugsweise $C_1$ bis $C_4$-Alkohole verwendet. Als Beispiele hierzu seien genannt: hexamethylverethertes Methylolmelamin, hexabutylverethertes Methylolmelamin, methylbutylverethertes Methylolmelamin, methylverethertes Methylolmelamin, butylverethertes Methylolmelamin und isobutylverethertes Methylolmelamin. Vom Gesichtspunkt der Kompatibilität mit dem erfindungsgemäßen Copolymeren sind vorzugsweise methylveretherte Methylolmelamine und hier im besonderen penta- bis hexamethylveretherte Methylolmelamine zu verwenden.

Typische Beispiele für mehrbasische Säuren sind Acrylharze mit mindestens zwei Carboxylgruppen je Molekül, Polyesterharze mit mindestens zwei Carboxylgruppen je Molekül und aromatische polybasische Säuren, wie zum Beispiel Trimellitsäure und Pyromellitsäure.

Typische Beispiele für polybasische Säureanhydride sind Bernsteinsäureanhydrid, Trimellitsäureanhydrid, Pyromellitsäureanhydrid und Vinylpolymere mit Carbonsäureanhydrid-Gruppen.

Typische Beispiele für blockierte Polyisocyanate werden erhalten, wenn man die aus der Polyurethanchemie bekannten Polyisocyanate mit konventionellen Blockierungsmitteln, wie zum Beispiel Alkoholen, Verbindungen mit phenolischen OH-Gruppen, Oximen, Lactamen, Acetessigsäureethylestern und N-mono-substituierten Carbonsäureamiden, schützt. Auch ist eine thermoversible Blockierung des Isocyanats durch Dimerisierung von Isocyanatfunktionen zum Uretdion möglich.

Wenn andererseits das fluorhaltige Lackbindemittel zur Herstellung einer Lackzusammensetzung verwendet wird, bei dem die Härtung schon bei Raumtemperatur erfolgen soll, so wird als Vernetzer ein nicht-blockiertes Polyisocyanat verwendet. Bei dieser Applikation wird das Härtungsmittel vor Gebrauch gesondert zugemischt und man arbeitet mit einem Zweikomponenten-Beschichtungssystem.

Typische Beispiele für Polyisocyanate sind aliphatische Diisocyanate, wie Hexamethylendiisocyanat, Trimethylhexamethylendiisocyanat und Tetramethylendiisocyanat; alicyclische Diisocyanate, wie xyloldiisocyanat, Methylcyclohexan-2,4- oder -2,6-diisocyanat, Isophorondiisocyanat und 4,4'-Methylen- bis-cyclohexylisocyanat; Polyisocyanate mit einer Biuret-Verzweigung, die erhalten werden durch Umsetzung der genannten Polyisocyanate mit Wasser; und Polyisocyanate mit einem Isocyanuratring, die erhalten werden durch Polymerisation der genannte Diisocyanate.

Die Isocyanat-Additionsreaktion wird von zahlreichen Katalysatoren beschleunigt, wobei solche mit Elektronen-Donator-(Lewis-Basen) oder -Acceptoreigenschaften (Lewis-Säuren) am wichtigsten sind. Tertiäre Amine, wie zum Beispiel Triethylamin, Diethylethanolamin, Dimethylethanolamin, 1,4-Diaza-bicyclo-(2,2,2)-octan und Cyclohexyldimethylamin, sind als Lewis-Basen wirksame Katalysatoren. Auch das als Acylierungskatalysator bekannte 4-Dimethylaminopyridin katalysiert die Isocyanatreaktion. Unter den katalytisch wirksamen Lewis-Säuren sind die Zinn-Verbindungen am wichtigsten. So werden Zinn-(IV)-Verbindungen, wie beispielsweise Dibutylzinndilaurat und -diacetat, oder Zinn-(II)-Verbindungen, wie Zinndioctanoat, als sehr wirksame Katalysatoren eingesetzt.

Schließlich ist auch die Vernetzung mit Epoxidharzen möglich, die ebenfalls in der Wärme und mit Katalysatoren, insbesondere mit Lithiumsalzen und quaternären Ammoniumsalzen, durchgeführt wird.

Den erfindungsgemäßen Lackzusammensetzungen können alle in der Lackindustrie gängigen Pigmente und Extender zugesetzt werden, insbesondere Titandioxid, Eisenoxide, aber auch Cadmiumsulfid, Zinksulfid, Bleiweiß, Bariumsulfat, pyrogene Kieselsäure, Bentone und Kreide sowie auch Phthalocyaninfarbstoffe. Die Pigmentierungshöhe, bezogen auf Komponente (a + b) : Pigment, sollte dabei im Bereich 1 : 0 bis 1 : 1 Gew.-Teilen liegen, um die Vorteile des erfindungsgemäßen Beschichtungssystems nicht nachteilig zu beeinflussen.

Ferner können für solche Lackrezepturen übliche Additive, wie beispielsweise Verlaufmittel, Dispergiermittel, Netzmittel, UV-Absorber oder Hilfsmittel, zur Verbesserung von Glanz oder Haftung enthalten sein. Gegebenenfalls können aber auch Mattierungsmittel hinzugefügt werden.

Die unter Zusatz der genannten Vernetzungsmittel formulierten Lackzusammensetzungen ergeben Überzüge, die auf die verschiedensten Substrate aufgebracht und, je nach Vernetzungskomponente, bei Raumtemperatur gehärtet oder bei höheren Temperaturen eingebrannt werden können. Substrate dafür sind insbesondere Metalle, wie beispielsweise Eisen, Stahl, Aluminium, Kupfer, Bronze und Messing, aber auch andere harte Oberflächen, wie Glas, Keramik, Beton oder auch Holz oder Kunststoffoberflächen. Gegebenenfalls soll der Untergrund mit mechanischen Mitteln vorbehandelt werden. Bei schlecht haftendem Substratmaterial kann die vorherige Beschichtung mit einem Primer zweckmäßig sein.

Das Aufbringen kann mit allen üblichen Methoden bewerkstelligt werden, wie Spritzen, Rakeln, Bürsten, Rollen, Tauchen, Fluten, Walzen oder Streichen. Besonders geeignet sind die auf Basis des erfindungsgemäßen Lackbindemittels formulierten Lackzusammensetzungen für kalthärtende Beschichtungen von Objekten, die der Witterung ausgesetzt sind. Daneben sind diese Lackzusammensetzungen auch für industrielle Einbrennlackierungen, vor allem nach dem sogenannten Bandbeschichtungsverfahren ("coil coating"), geeignet.

Das ein solches Fluorcarbonwachs enthaltende erfindungsgemäße fluorhaltige Lackbindemittel erbringt in Lackzusammensetzungen im Vergleich zu solchen, die kein Fluorcarbonwachs enthalten, eine erhöhte Witterungsbeständigkeit und einen erhöhten Korrosionsschutz. Darüber hinaus bewirken die Fluorcarbonwachse bessere Gleiteigenschaften und Antihafteigenschaften, vor allem gegen Eis und Schnee, auf der Lackoberfläche. Sie vermindern ein Anschmutzen und erhöhen den selbstreinigenden Effekt bei Beschichtungen, die der Bewitterung ausgesetzt sind. Sie bewirken ferner einen ästhetischen Mattierungseffekt in weißen, farbigen und auch farblosen Lackeinstellungen.

Die Erfindung wird durch folgende Beispiele erläutert:

In den nachstehenden Beispielen wurden folgende Prüfmethoden und Tests verwendet:

Staubtrocknung entspricht Trockengrad 1 nach DIN-Norm 53 150 "Bestimmung des Trockengrads von Anstrichstoffen".

Klebfreitrocknung entspricht Trockengrad 2 nach DIN-Norm 53 150.

| | |
|---|---|
| Pendelhärte nach König: | DIN-Norm 53 157 |
| Erichsen-Tiefung: | ISO-Vorschrift 1520 |
| Impact: | ECCA (European Coil-Coater's Association) T 5, entspricht den Referenznormen ASTM D 2794 - 69 und ISO R 291 |
| Bleistifthärte: | ECCA T 4 |

Biegeprüfung (T-Bend):

Der Lack wird auf Aluminiumblech (Bonder Al 722) aufgetragen. Filmstärke naß 100 µm, entspricht 20 bis 22 µm trocken. Ein 1 cm breiter Streifen dieses Blechs wird mit außenliegendem Film geknickt und um 180° gebogen. Dieser Vorgang wird (mit zunehmendem Biegeradius) an gleichen Streifen solange wiederholt, bis der Film nicht mehr reißt (T 0 = reißt beim ersten Biegevorgang nicht, T 1 = reißt beim zweiten Biegevorgang nicht und so weiter).

Beispiel 1

Abmischung in der Perlmühle:

| | |
|---|---|
| - Copolymeres aus 37 Mol-% an copolymerisierten TFE-Einheiten, 31 Mol-% an copolymerisierten Einheiten eines Vinylesters einer stark verzweigten Carbonsäure mit einem Acylrest von 9 C-Atomen (wobei im Acylrest ein Isomerengemisch vorliegt, enthaltend 28 Mol-% C-Ketten mit zwei quartären C-Atomen; 68 Mol-% C-Ketten mit einem quartären und zwei tertiären C-Atomen; 4 Mol-% C-Ketten mit einem quartären und einem tertiären C-Atom) und 32 Mol-% an copolymerisierten Einheiten des Vinylacetats; OH-Zahl nach Verseifung 115 (50gew.%ige Lösung in Butylacetat) | 200,0 g |
| - TFE-Aufbauwachs (Schmelzviskosität 1,8 · $10^3$ Pa s, mittlere Teilchengröße des Primärkorns $d_{50}$ 0,4 µm) | 40,0 g |
| | 240,0 g |

Lackansatz:
- Perlmühlenansatz, wie oben 240,0 g
- Hexamethylendiisocyanat-Trimer, 75gew.%ige Lösung (®Desmodur N 75) 52,2 g
- Dibutylzinndilaurat (1 gew.%ige Lösung in Xylol) 200,0 mg

Die Aushärtung des Lackes erfolgt bei 20 °C.

Die Mischung wird mit einem Auftragsgerät auf eine Glasplatte aufgetragen. Die Beschichtung wird verschiedenen Tests unterworfen. Die Bestimmung der Permeationsraten erfolgt am freien Film. Für diese Messungen wird der Film zuvor von der Glasplatte abgelöst. Die Ergebnisse sind in Tabelle 1 aufgeführt.

Tabelle 1

| Test | Ergebnis |
|---|---|
| Staubtrocknung | 35 min |
| Klebfreitrocknung | 60 min |
| Pendelhärte 7 d | 138 s |
| Permeationsraten (100 μm Filmstärke) | |
| $H_2O$ [g/m² · d] | 4,5 |
| $O_2$ [cm³/m² · d · bar] | 322 |
| $N_2$ [cm³/m² · d · bar] | 88 |
| $CO_2$ [cm³/m² · d · bar] | 1455 |

Beispiel 2

Die Herstellung der Beschichtungen erfolgt, wie in Beispiel 1 beschrieben, jedoch werden zur Variation der Härte der Beschichtungen verschiedene Mengen an Hexamethylendiisocyanat-Trimer eingesetzt. Der Zusammenhang zwischen verwendeter Härtermenge und der resultierenden Beschichtungshärte ist in Tabelle 2 dargestellt.

Tabelle 2

| Härtermenge | Pendelhärte 7 d |
|---|---|
| 65,3 g | 148 s |
| 78,3 g | 156 s |
| 91,4 g | 158 s |
| 104,4 g | 162 s |

Beispiel 3 (Vergleichsbeispiel ohne Fluorcarbonwachs)

Lackansatz:

- Copolymeres aus Beispiel 1 (50gew.%ige Lösung in Butylacetat) 200,0 g
- Hexamethylendiisocyanat-Trimer, 75gew.%ige Lösung (®Desmodur N 75) 52,2 g
- Dibutylzinndilaurat (1 gew.%ige Lösung in Xylol) 200,0 g

Die Aushärtung des Lackes erfolgt bei 20 °C.

Die Herstellung der Beschichtung und die Durchführung des Tests erfolgt, wie in Beispiel 1 beschrieben. Die Ergebnisse sind in Tabelle 3 aufgeführt.

Tabelle 3

| Test | Ergebnis |
|---|---|
| Staubtrocknung | 30 min |
| Klebfreitrocknung | 60 min |
| Pendelhärte 7 d | 164 s |
| Permeationsraten (100 $\mu m$ Filmstärke) | |
| $H_2O$ [$g/m^2 \cdot d$] | 6,6 |
| $O_2$ [$cm^3/m^2 \cdot d \cdot bar$] | 412 |
| $N_2$ [$cm^3/m^2 \cdot d \cdot bar$] | 84 |
| $CO_2$ [$cm^3/m^2 \cdot d \cdot bar$] | 1786 |

Beispiel 4

Abmischung in der Perlmühle:

- Copolymeres aus Beispiel 1 (50gew.%ige Lösung in Butylacetat) 100,0 g
- Butylacetat 43,0 g
- TFE-Abbauwachs (gewonnen durch pyrolytischen Abbau von PTFE; Schmelzviskosität $1,2 \cdot 10^2$; mittlere Teilchengröße $d_{50}$ 9 $\mu m$) 20,0 g

163,0 g

Lackansatz:

- Perlmühlenansatz, wie oben 163,0 g
- Hexamethylendiisocyanat-Trimer, 75gew.%ige Lösung (®Desmodur N 75) 26,1 g
- Dibutylzinndilaurat (1 gew.%ige Lösung in Xylol) 100,0 mg

Durch Zugabe von weiterem Butylacetat wird die Viskosität auf 20 Sekunden (Auslaufbecher DIN 53 211)

eingestellt und der Lack mit einer Spritzpistole aufgetragen. Die Beschichtung wird verschiedenen Tests unterworfen. Die Ergebnisse sind in Tabelle 4 dargestellt.

Tabelle 4

| Test | Ergebnis |
|---|---|
| Staubtrocknung | 10 min |
| Klebfreitrocknung | 40 min |
| Pendelhärte 7 d | 158 s |

Beispiel 5

Abmischung in der Perlmühle:

- Copolymeres aus Beispiel 1 (50gew.%ige Lösung in Butylacetat) 200,0 g
- TFE-Aufbauwachs (wie Beispiel 1) 40,0 g
- blockiertes aliphatisches Isocyanat (25gew.%ige Lösung in Methoxypropylacetat; ®Additol VXL 9946) 241,0 g

Filmaufzug:

Perlmühlenansatz, wie oben
Die Mischung wird auf Aluminiumblech (Bonder Al 722) aufgetragen.
Rakelaufzug 100 µm naß, circa 20 bis 22 µm trocken.
PMT (Peak-metal-temperature): 224 bis 232 °C.
Die Beschichtung wird verschiedenen Tests unterworfen. Die Ergebnisse sind in Tabelle 5 aufgeführt.

Tabelle 5

| Test | Ergebnis |
|---|---|
| Acetontest | >100 |
| Impact | 70 ip |
| T-Bend | T 2 |
| Haftung nach T-Bend | 0 |
| Bleistifthärte | F |

Beispiel 6

Abmischung in der Perlmühle:

- Copolymeres aus Beispiel 1 (50gew.%ige Lösung in Butylacetat) 200,0 g
- TFE-Abbauwachs (wie Beispiel 4) 40,0 g
- pentamethylverethertes Methylolmelamin (®Maprenal MF 900) 25,0 g

- p-Toluolsulfonsäure 120,0 mg

Filmaufzug:

Perlmühlenansatz, wie oben
Die Mischung wird auf Aluminiumblech (Bonder Al 722) aufgetragen.
Rakelaufzug 100 µm naß, circa 20 bis 22 µm trocken.
Die Beschichtung wird nach zwei unterschiedlichen Verfahren eingebrannt und anschließend verschiedenen Tests unterworfen. Die Ergebnisse sind in Tabelle 6 aufgeführt.

Tabelle 6

| Test | Einbrenn-bedingung 190 °C/15 min | Einbrenn-bedingung 330 °C/45 s |
|---|---|---|
| Acetontest | 336 | >100 |
| Impact | 80 ip | 75 ip |
| T-Bend | T 3 | T 3 |
| Haftung nach T-Bend | 0 | 0 |
| Bleistifthärte | H 4 | F |

Beispiel 7

Abmischung in der Perlmühle:

| | |
|---|---|
| - Copolymeres, bestehend aus 47 Mol-% an copolymerisierten TFE-Einheiten, 30 Mol-% an copolymerisierten Einheiten eines stark verzweigten Vinylesters [dessen Acylrest ein Gemisch darstellt aus im wesentlichen einer Acylkomponente mit $R^1 = CH_3$, $R^2 = C_2H_5$, $R^3 = CH_3(CH_2)_4-$ und einer weiteren Acylkomponente mit $R^1 = CH_3$, $R^2 = CH_3$, $R^3 = CH_3(CH_2)_5-$] und 23 Mol-% an copolymerisierten Einheiten von ω-Hydroxy-n-butylvinylether (50gew.%ige Lösung in Butylacetat) | 200,0 g |
| - TFE-Aufbauwachs (wie Beispiel 1) | 40,0 g |
| - Titandioxid (Typ CL 310) | 50,0 g |
| - Butylacetat | 86,0 g |
| | 376,0 g |

Lackansatz:

- Perlmühlenansatz, wie oben 376,0 g
- Hexamethylendiisocyanat-Trimer, 75gew.%ige Lösung (®Desmodur N 75) 44,0 g
- Dibutylzinndilaurat (1 gew.%ige Lösung in Xylol) 200,0 mg

Die Beschichtung wird mit einem Auftragsgerät auf eine Glasplatte aufgetragen. Die Filmstärke beträgt 100 µm naß. Die Beschichtung wird verschiedenen Tests unterworfen. Die Ergebnisse sind in Tabelle 7 zusammengestellt.

Tabelle 7

| Test | | Ergebnis |
|---|---|---|
| Staubtrocknung | | > 5 h |
| Klebfreitrocknung | | <24 h |
| Pendelhärte 7 d | | 73 s |
| Sun Test*) | 0 h | 69 % |
| | 250 h | 67 % |
| | 500 h | 66 % |
| | 750 h | 66 % |
| | 1000 h | 64 % |

*) Bestimmung des Glanzes der Oberfläche bei 60° Spiegelreflexion nach DIN-Norm 67 530 (% reflektierte Lichtintensität, bezogen auf 100 % eingestrahlte Lichtintensität)

**Patentansprüche**

**Patentansprüche für folgende Vertragsstaaten : AT, BE, CH, DE, DK, FR, GB, IT, LI, LU, NL, SE**

1. Fluorhaltiges Lackbindemittel, enthaltend
   a) 5 bis 80 Gew.-%, bezogen auf die Summe der Komponenten a) + b), eines feinteiligen niedermolekularen Polyfluorolefins, abgeleitet von Fluorolefinen der Formel $CF_2$=CFX, worin X = F oder Cl ist, mit einer Schmelzviskosität von $10^1$ bis $10^6$ Pa s,
   b) 95 bis 20 Gew.-%, bezogen auf die Summe der Komponenten a) + b), eines fluorhaltigen Copolymeren, das aus copolymerisierten Einheiten eines Fluorolefins der allgemeinen Formel $CF_2$=CFY, worin Y = F, ein Perfluoralkylrest mit 1 bis 8 C-Atomen oder Cl ist, aus copolymerisierten Einheiten eines Vinylesters einer stark verzweigten Carbonsäure mit einem Acylrest von 9 bis 11 C-Atomen und aus copolymerisierten Einheiten eines OH-Gruppen enthaltenden Vinylmonomeren zusammengesetzt ist, und
   c) 20 bis 300 Gew.-Teilen, bezogen auf 100 Gew.-Teile der Summe a) + b), eines üblichen Lacklösungsmittels.

2. Fluorhaltiges Lackbindemittel gemäß Anspruch 1, dadurch gekennzeichnet, daß die Komponente a) ein

niedermolekulares PTFE ist.

3. Lackzusammensetzung, enthaltend ein fluorhaltiges Lackbindemittel und übliche Vernetzungsmittel, dadurch gekennzeichnet, daß das fluorhaltige Lackbindemittel enthält
   a) 5 bis 80 Gew.-%, bezogen auf die Summe der Komponenten a) + b), eines feinteiligen niedermolekularen Polyfluorolefins, abgeleitet von Fluorolefinen der Formel $CF_2$=CFX, worin X = F oder Cl ist, mit einer Schmelzviskosität von $10^1$ bis $10^6$ Pa s,
   b) 95 bis 20 Gew.-%, bezogen auf die Summe der Komponenten a) + b), eines fluorhaltigen Copolymeren, das aus copolymerisierten Einheiten eines Fluorolefins der allgemeinen Formel $CF_2$=CFY, worin Y = F, ein Perfluoralkylrest mit 1 bis 8 C-Atomen oder Cl ist, aus copolymerisierten Einheiten eines Vinylesters einer stark verzweigten Carbonsäure mit einem Acylrest von 9 bis 11 C-Atomen und aus copolymerisierten Einheiten eines OH-Gruppen enthaltenden Vinylmonomeren zusammengesetzt ist, und
   c) 20 bis 300 Gew.-Teilen, bezogen auf 100 Gew.-Teile der Summe a) + b), eines üblichen Lacklösungsmittels,
   und daß übliche Pigmente in einer Menge von 0 bis 1 Gew.-Teil, bezogen auf 1 Gew.-Teil der Summe der Komponenten a + b, zugesetzt werden.

**Patentansprüche für folgenden Vertragsstaat : ES**

1. Verfahren zur Herstellung von Überzügen auf der Basis eines fluorhaltigen Lackbindemittels und eines üblichen Vernetzungsmittels, dadurch gekennzeichnet, daß ein fluorhaltiges Lackbindemittel eingesetzt wird, enthaltend
   a) 5 bis 80 Gew.-%, bezogen auf die Summe der Komponenten a) + b), eines feinteiligen niedermolekularen Polyfluorolefins, abgeleitet von Fluorolefinen der Formel $CF_2$=CFX, worin X = F oder Cl ist, mit einer Schmelzviskosität von $10^1$ bis $10^6$ Pa s,
   b) 95 bis 20 Gew.-%, bezogen auf die Summe der Komponenten a) + b), eines fluorhaltigen Copolymeren, das aus copolymerisierten Einheiten eines Fluorolefins der allgemeinen Formel $CF_2$=CFY, worin Y = F, ein Perfluoralkylrest mit 1 bis 8 C-Atomen oder Cl ist, aus copolymerisierten Einheiten eines Vinylesters einer stark verzweigten Carbonsäure mit einem Acylrest von 9 bis 11 C-Atomen und aus copolymerisierten Einheiten eines OH-Gruppen enthaltenden Vinylmonomeren zusammengesetzt ist, und
   c) 20 bis 300 Gew.-Teilen, bezogen auf 100 Gew.-Teile der Summe a) + b), eines üblichen Lacklösungsmittels.

2. Verfahren zur Herstellung von Überzügen gemäß Anspruch 1, dadurch gekennzeichnet, daß ein fluorhaltiges Lackbindemittel eingesetzt wird, dessen Komponente a) ein niedermolekulares Polytetrafluorethylen ist.

**Claims**

**Claims for the following Contracting States : AT, BE, CH, DE, DK, FR, GB, IT, LI, LU, NL, SE**

1. A fluorine-containing paint binder which comprises
   a) 5 to 80 % by weight, based on the sum of the components a) + b), of a finely divided, low-molecular polyfluoro-olefin, derived from fluoro-olefins of the formula $CF_2$=CFX, in which X is F or Cl, having a melt viscosity from $10^1$ to $10^6$ Pa s,
   b) 95 to 20 % by weight, based on the sum of the components a) + b), of a fluorine-containing copolymer, which is composed of copolymerized units of a fluoro-olefin of the formula $CF_2$=CFY, in which Y is F, a perfluoroalkyl radical having 1 to 8 carbon atoms or Cl, of copolymerized units of a vinyl ester of a strongly branched carboxylic acid having an acyl radical of 9 to 11 carbon atoms and of copolymerized units of a vinyl monomer containing OH groups, and
   c) 20 to 300 parts by weight, based on 100 parts by weight of the sum a) + b), of a conventional paint solvent.

2. The fluorine-containing paint binder as claimed in claim 1, wherein the component a) is a low-molecular PTFE.

3. A paint composition, containing a fluorine-containing paint binder and conventional cross-linking agents, wherein the fluorine-containing paint binder comprises
   a) 5 to 80 % by weight, based on the sum of the components a) + b), of a finely divided, low-molecular polyfluoro-olefin, derived from fluoro-olefins of the formula $CF_2$=CFX, in which X is F or Cl, having a melt viscosity from $10^1$ to $10^6$ Pa s,
   b) 95 to 20 % by weight, based on the sum of the components a) + b), of a fluorine-containing copolymer, which is composed of copolymerized units of a fluoro-olefin of the formula $CF_2$=CFY, in which Y is F, a perfluoroalkyl radical having 1 to 8 carbon atoms or Cl, of copolymerized units of a vinyl ester of a strongly branched carboxylic acid having an acyl radical of 9 to 11 carbon atoms and of copolymerized units of a vinyl monomer containing OH groups, and
   c) 20 to 300 parts by weight, based on 100 parts by weight of the sum of a) + b), of a conventional paint solvent,

   and wherein conventional pigments are added in an amount from 0 to 1 part by weight, based on 1 part by weight of the sum of the components a) + b).

**Claims for the following Contracting State : ES**

1. A process for making coatings on the basis of a fluorine-containing paint binder and a usual curing agent which comprises using a fluorine containing paint binder containing
   a) 5 to 80 % by weight, based on the sum of the components a) + b), of a finely divided, low-molecular polyfluoro-olefin, derived from fluoro-olefins of the formula $CF_2$=CFX, in which X is F or Cl, having a melt viscosity from $10^1$ to $10^6$ Pa s,
   b) 95 to 20 % by weight, based on the sum of the components a) + b), of a fluorine-containing copolymer, which is composed of copolymerized units of a fluoro-olefin of the formula $CF_3$=CFY, in which Y is F, a perfluoroalkyl radical having 1 to 8 carbon atoms or Cl, of copolymerized units of a vinyl ester of a strongly branched carboxylic acid having an acyl radical of 9 to 11 carbon atoms and of copolymerized units of a vinyl monomer containing OH groups, and
   c) 20 to 300 parts by weight, based on 100 parts by weight of the sum a) + b), of a conventional paint solvent.

2. The process for making coatings according to claim 1, which comprises using a fluorine containing paint binder, the component a) of which is a low molecular polytetrafluoroethylene.

## Revendications

**Revendications pour les Etats contractants suivants : AT, BE, CH, DE, DK, FR, GB, IT, LI, LU, NL, SE**

1. Liant fluoré pour laques, vernis ou peintures, ce liant contenant :
   (a) 5 à 80 % en poids, par rapport à la somme des constituants (a) + (b), d'une polyfluoro-oléfine à bas poids moléculaire, en fines particules, provenant d'oléfines fluorées de formule $CF_2$=CFX (dans laquelle X représente F ou Cl), et qui a une viscosité en masse fondue valant de $10^1$ à $10^6$ Pa.s,
   (b) 95 à 20 % en poids, par rapport à la somme des constituants (a) + (b), d'un copolymère fluoré, composé de motifs copolymérisés d'une fluoro-oléfine de formule générale $CF_2$=CFY, (dans laquelle Y = F, un reste perfluoro-alkyle ayant 1 à 8 atomes de carbone ou Cl), de motifs copolymérisés d'un ester vinylique d'un acide carboxylique fortement ramifié comportant un reste acyle de 9 à 11 atomes de carbone, et de motifs copolymérisés d'un monomère vinylique contenant des groupes OH, et
   (c) 20 à 300 parties en poids, par rapport à 100 parties en poids de la somme (a) + (b), d'un solvant usuel pour laques, vernis ou peintures.

2. Liant fluoré pour laques, vernis ou peintures selon la revendication 1, caractérisé en ce que le constituant (a) est un PTFE (polytétrafluoréthylène) à bas poids moléculaire.

3. Composition de laques ou peintures, contenant un liant fluoré pour laques ou peintures et des agents usuels de réticulation, composition caractérisée en ce que le liant fluoré pour laques ou peintures contient :
   (a) 5 à 80 % en poids, par rapport à la somme des constituants (a) + (b), d'une polyfluoro-oléfine à bas poids moléculaire, en fines particules, provenant d'oléfines fluorées de formule $CF_2$=CFX, (dans

laquelle X représente F ou Cl), et qui a une viscosité en masse fondue valant de $10^1$ à $10^6$ Pa.s,
(b) 95 à 20 % en poids, par rapport à la somme des constituants (a) + (b), d'un copolymère fluoré, composé de motifs copolymérisés d'une fluoro-oléfine de formule générale $CF_2$=CFY, (dans laquelle Y = F, un reste perfluoro-alkyle ayant 1 à 8 atomes de carbone ou Cl), de motifs copolymérisés d'un ester vinylique d'un acide carboxylique fortement ramifié comportant un reste acyle de 9 à 11 atomes de carbone, et de motifs copolymérisés d'un monomère vinylique contenant des groupes OH, et
(c) 20 à 300 parties en poids, par rapport à 100 parties en poids de la somme (a) + (b), d'un solvant usuel pour laques, vernis ou peintures

et en ce qu'on y ajoute des pigments usuels, présents en une quantité de 0 à 1 partie en poids, pour une partie en poids de la somme des constituants (a) + (b).

**Revendications pour l'Etat contractant suivant : ES**

1. Procédé pour produire des revêtements à base d'un liant fluoré pour laques, peintures ou vernis et d'un agent usuel de réticulation, procédé caractérisé en ce qu'on utilise un liant fluoré pour laques, vernis ou peintures, qui contient :
   (a) 5 à 80 % en poids, par rapport à la somme des constituants (a) + (b), d'une polyfluoro-oléfine à bas poids moléculaire, en fines particules, provenant d'oléfines fluorées de formule $CF_2$=CFX, (dans laquelle X représente F ou Cl), et qui a une viscosité en masse fondue valant de $10^1$ à $10^6$ Pa.s,
   (b) 95 à 20 % en poids, par rapport à la somme des constituants (a) + (b), d'un copolymère fluoré, composé de motifs copolymérisés d'une fluoro-oléfine de formule générale $CF_2$=CFY, (dans laquelle Y = F, un reste perfluoro-alkyle ayant 1 à 8 atomes de carbone ou Cl), de motifs copolymérisés d'un ester vinylique d'un acide carboxylique fortement ramifié comportant un reste acyle de 9 à 11 atomes de carbone, et de motifs copolymérisés d'un monomère vinylique contenant des groupes OH, et
   (c) 20 à 300 parties en poids, par rapport à 100 parties en poids de la somme (a) + (b), d'un solvant usuel pour laques, vernis ou peintures.

2. Procédé pour produire des revêtements selon la revendication 1, caractérisé en ce qu'on utilise un liant fluoré pour laques, vernis ou peintures, dont le constituant (a) est un polytétrafluoréthytlène à bas poids moléculaire .